Europäisches Patentamt

European Patent Office

Office européen des brevets

(19)

(11) Veröffentlichungsnummer : **0 336 214 B1**

# (12) EUROPÄISCHE PATENTSCHRIFT

(45) Veröffentlichungstag der Patentschrift :
01.04.92 Patentblatt 92/14

(51) Int. Cl.$^5$ : **C07F 9/547**

(21) Anmeldenummer : 89105097.3

(22) Anmeldetag : 22.03.89

(54) **Verfahren zur Reinigung von Salzen des Riboflavin-5'-phosphats, insbesondere von Mononatrium-riboflavin-5'-phosphat.**

(30) Priorität : 31.03.88 DE 3810957

(43) Veröffentlichungstag der Anmeldung :
11.10.89 Patentblatt 89/41

(45) Bekanntmachung des Hinweises auf die
Patenterteilung :
01.04.92 Patentblatt 92/14

(84) Benannte Vertragsstaaten :
**CH DE FR GB LI NL**

(56) Entgegenhaltungen :
FR-A- 2 511 686
**CHEMICAL ABSTRACTS, Band 89, Nr. 3, 17.
Juli 1978, Ref.Nr. 19426c; R.D. Johnson** "A
preparative method for purification of purification of riboflavin 5-monophosphate" & Anal
Biochem. 1978, 86 (2), 526-30

(56) Entgegenhaltungen :
**METHODS IN ENZYMOLOGY, Band 122, Seiten 209-222 (1986); P. Nielsen et al.**
"**Preparation, Properties and Separation by
High-Performance Liquid Chromatography of
Riboflavin Phosphates**"
**METHODS IN ENZYMOLOGY, Band 122, Seiten 199-208 (1986); R.P. Hausinger et al.**
"**Separation of Flavons and Flavin Analogs by
High h-Performance Liquid Chromatography**"

(73) Patentinhaber : **BASF Aktiengesellschaft
Carl-Bosch-Strasse 38
W-6700 Ludwigshafen (DE)**

(72) Erfinder : **Dobler, Walter, Dr.
Feuerbachstrasse 17
W-6900 Heidelberg (DE)**
Erfinder : **Eggersdorfer, Manfred, Dr.
Hannongstrasse 18
W-6710 Frankenthal (DE)**
Erfinder : **Paust, Joachim, Dr.
Ringstrasse 3
W-6708 Neuhofen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 336 214 B1

## Beschreibung

Die Erfindung betrifft ein Verfahren zur Reinigung von Salzen von Riboflavin-5'-phosphat (5'-Flavinmononucleotid und daher nachfolgend als 5'-FMN bezeichnet), insbesondere des handelsüblichen Mononatriumsalzes, von 5'-FMN, welche bei der Phosphorylierung von Riboflavin und Umsetzen der erhaltenen Riboflavin-5'-phosphorsäure mit wäßrigen Basen erhalten werden.

5'-FMN ist eine Verbindung, die eine wesentliche Rolle als Coenzym in verschiedenen Enzymreaktionen im lebenden Körper spielt und die deshalb in Form ihrer Salze, insbesondere in Form von Natrium-5'-FMN, als Zusatz für Arzneimittel, Nahrungsmittel und Futterstoffe verwendet wird. Natrium-5'-FMN dient auch als Ausgangsmaterial für Flavin-adenin-dinukleotid, das als therapeutisches Mittel gegen Vitamin-$B_2$-Mangel eingesetzt wird.

Industriell wird Natrium-5'-FMN im allgemeinen durch Umsetzen von Riboflavin mit einem Phosphorylierungsmittel, wie partiell hydrolisiertem Phosphorylchlorid, und anschließendes Behandeln des erhaltenen Riboflavin-5'-phosphats mit Natronlauge gewonnen. Dementsprechend enthält es als Verunreinigungen etwa 5 bis 30 % unumgesetztes Riboflavin, isomere Riboflavinmononucleotide, wie 2'-FMN und 4'-FMN sowie Riboflavin-dinucleotide (5',4'-FDN und 5',3'-FDN) und Polyphosphate. Nur das 5'-FMN ist die physiologisch aktive Form des wasserlöslichen Riboflavins, d.h., die isomeren Riboflavinmonophosphate und -polyphosphate zeigen keine Vitamin-B2-Aktivität mehr. Daher sind Produkte von Interesse, die einen möglichst hohen prozentualen Anteil an 5'-FMN aufweisen. Auch ist ein hoher Gehalt an unumgesetztem Riboflavin unerwünscht, da dieser verhindert, daß aus dem Produkt eine stabile, klare, homogene wäßrige Lösung hergestellt werden kann. Die im Handel erhältlichen Präparate enthalten auch bei Deklarierung als "hochreines Natrium-5'-FMN" im allgemeinen nicht mehr als 74 % an Natrium-5'-FMN. Erwünscht ist ein Marktprodukt, das mindestens 70 % Natrium-5'-FMN und maximal 5 % Riboflavin enthält, sowie ein hochreines Marktprodukt, das mindestens 80 % Natrium-5'-FMN, kein unumgesetztes Riboflavin und als Nebenprodukte nur noch die isomeren Monophosphate enthält.

## Stand der Technik:

Bei allen bekannten Herstellungsverfahren von Mononatrium-5'-FMN durch Phosphorylierung von Riboflavin wird zunächst ein Rohprodukt erhalten, das noch erhebliche Mengen an unumgesetzten Riboflavin, sowie isomere Mono- und Polyphosphate als Nebenprodukte enthält. Um ein gut wasserlösliches Produkt zu erhalten, aus dem sich stabile Lösungen herstellen lassen, ist es unbedingt erforderlich, den Riboflavingehalt wesentlich zu vermindern. Andernfalls tritt je nach Riboflavingehalt mehr oder weniger schnell eine Trübung der Lösung auf.

Aus Chemical Engineering, Nov. 1954, Seiten 120f ist bekannt, daß in einem Produktionsprozeß das 5'-FMN angereichert wird, indem man dieses mehrmals kalt in wäßriger Lösung mit Ethanolamin als Monosalz in Lösung bringt und durch Filtration vom ungelösten Riboflavin abtrennt. Bei der anschließenden Fällung mittels Ethanol fällt das 5'-FMN in angereicherter Form an. Der Reinigungsgrad ist jedoch unvollständig, so daß der Prozeß mehrmals wiederholt werden muß. Ein weiterer Nachteil dieses Verfahrens ist, daß man für die Filtration des ungelösten Riboflavins teure Filtrationsvorrichtungen benötigt, da das Riboflavin in Form äußerst feiner Kristalle anfällt. Außerdem muß das hierbei gebildete Ammoniumsalz in einem weiteren Schritt noch in das Natriumsalz überführt werden. Dieser Prozeß ist daher umständlich, teuer und mit einem hohen Lösungsmittelverbrauch verbunden.

Ferner ist aus CA 83 (1975) 79551a bekannt, daß man Natrium-5'-FMN reinigen kann, indem man es an Aktivkohle absorbiert und so von dem im Eluat befindlichen Riboflavin bzw. don Diphosphaten abtrennt. Das Natrium-5'-FMN wird anschließend mit verdünnter NaOH desorbiert und fällt dabei in Form einer stark verdünnten Lösung an. Da bei diesem Verfahren das gewünschte Produkt absorbiert wird, werden große Mengen an Absorbern benötigt, wodurch diese Methode für ein technisches Verfahren zu teuer wird.

Weiterhin ist aus CA 104 (1986) 19 453n ein Reinigungsverfahren bekannt, bei dem die isomeren Monophosphate an einem definierten Anionenaustauscher absorbiert und mit einer Kochsalzlösung eluiert werden. Nachteilig an diesem Verfahren ist, daß ein sehr großes Volumen an Ionenaustauscher benötigt wird, und außerdem die Produktfraktion zusätzlich an einem weiteren Ionenaustauscher von NaCl abgetrennt werden muß.

Weiterhin ist aus der DE-OS 32 30 895 bekannt, daß 5'-FMN durch Chromatographie an einem schwach basischen, modifizierten Ionenaustauscher chromatographisch gereinigt werden kann. Als Eluens wird hierbei ein Puffer mit einem pH-Wert von 3,8 bestehend aus Ameisensäure und NaCl benötigt. Auch bei diesem Verfahren wird daher ein weiterer Reinigungsschritt zur Entfernung des Puffers nach der Trennung notwendig.

Eine gute Übersicht über den derzeitigen Stand der Technik bei der Reinigung von 5'-FMN ist in dem Übersichtsartikel von P. Nielsen et al in "Methods in Enzymology, Vol. 122, 209-220 (1986)" und von R. Hausinger et al in "Methods in Enzymology, Vol. 122, 199-208 (1986)" zu finden. In loc. cit wird auch eine präparative Reinigung von rohem 5'-FMN an Silicagel RP-18 beschrieben, bei der mit einem Ammoniumformiat/Ameisensäurepuffer eluiert wird. Als weitere Reinigungsmethoden werden beschrieben:

a) Ionenaustauscher auf Polystyrolbasis unter Benutzung von Puffersystemen wie Isopropanol/Triethylammoniumacetat.

b) Ionenaustauscher auf Cellulosebasis und unter Benutzung von Puffersystemen, wie Ammoniumcarbonat, sowie

c) Chromatographie an immobilisierter Flavokinase. Diese Methode ist jedoch wegen des teuren Trennungsmediums das nur eine geringe Standzeit hat, nur für sehr kleine Mengen geeignet.

Es war daher die Aufgabe der Erfindung, ein Verfahren zur Reinigung von Salzen von 5'-FMN zu entwickeln, mit dessen Hilfe es gelingt, das unumgesetzte Riboflavin aus dem Phosphorylierungsgemisch ohne die Nachteile der bekannten Verfahren auf einfache Weise möglichst weitgehend zu entfernen; das bedeutet: in möglichst nur einem Reinigungsschritt und unter Verwendung von nur kleinen Mengen an Reinigungshilfsmitteln.

Es war weiterhin die Aufgabe der Erfindung, das weitgehend von Riboflavin gereinigte Salz von 5'-FMN auf möglichst einfache Weise in die gewünschten marktgerechten Produkte zu überführen. Dies bedeutet entweder die Entwicklung eines Verfahrens zur anschließenden chromatographischen Feinreinigung ohne Verwendung von Salz- oder Pufferlösungen als Eluent oder aber ein geeignetes Kristallisationsverfahren.

Es wurde nun überraschenderweise gefunden, daß man das bei der Phosphorylierung von Riboflavin und Umsetzen des dabei gebildeten, mit unumgesetztem Riboflavin, isomeren Riboflavinmonophosphaten und -diphosphaten verunreinigten Ribloflavin-5'-phosphats (5'-FMN) mit Alkalihydroxiden oder Stickstoffbasen, insbesondere mit Natronlauge erhaltenen Salzen von 5'-FMN weitgehend von unumgesetzten Riboflavin reinigen kann, wenn man

a) aus dem bei der Phosphorylierung erhaltenen Roh-5'-FMN, Wasser, dem Alkalihydroxid oder der Stickstoffbase, insbesondere von Natronlauge, ggf. unter Erwärmen auf 30 bis 100°C, vorzugsweise 45 bis 55°C, eine etwa 1 bis 15 gew.%ige, vorzugsweise etwa 4 bis 6 gew.%ige homogene, klare wäßrige Roh-5'-FMN-Salz-Lösung mit einem pH-Wert zwischen 4 und 8, vorzugsweise 5,5 und 6,5 herstellt,

b) die erhaltene Lösung mit einem geeigneten polymeren Adsorberharz in Form unlöslicher kleiner Kügelchen behandelt, das sich durch besondere mechanische Festigkeit, makroretikulare Porosität, eine gleichförmige Porengrößenverteilung, eine große aktive Oberfläche und durch eine chemisch homogene, nichtionogene Struktur auszeichnet und durch Co-Polymerisation aus Polystyrol/Divinylbenzol; Acrylsäurederivaten/Divinylbenzol oder Methacrylsäurederivaten/Divinylbenzol hergestellt wurde und

c) aus der dabei erhaltenen Lösung, das weitgehend von unumgesetztem Riboflavin gereinigte 5'-FMN-Salz isoliert ggf. in das Natrium-5'-FMN überführt und gewünschtenfalls die Lösung einer anschließenden Feinreinigung zuführt.

Mit besonderem Vorteil gelingt das Verfahren, wenn man die homogene wäßrige Roh-5'-FMN-Salz-Lösung durch eine Säule leitet, die mit dem geeigneten polymeren Adsorberharz gefüllt ist, und aus dem dabei erhaltenen Eluat das gereinigte 5'-FMN-Salz isoliert oder das Eluat einer anschließenden Feinreinigung zuführt.

Als für das erfindungsgemäße Verfahren geeignete polymere Adsorberharze werden handelsübliche Polymere mit besonderer mechanischer Festigkeit, makroretikularer (schwammstrukturartiger) Porosität, gleichförmiger Porengrößenverteilung, großer aktiver Oberfläche und chemisch homogener, nichtionogener Struktur verstanden, die durch durch Copolymerisation aus Polystyrol/Divinylbenzol (unpolar); Acrylsäurederivaten/Divinylbenzol (polar) oder Methacrylsäurederivaten/Divinylbenzol (mäßig polar) hergestellt wurden und im allgemeinen in Form von unlöslichen Kügelchen im Handel sind.

Mit besonderem Vorteil verwendet man die durch Copolymerisation von Acrylsäurederivaten mit Divinylbenzol hergestellten polaren Adsorberharze, da hierbei die Regenerierung einfacher verläuft und mit Wasser keine Benetzungsprobleme auftreten. Als geeignete Adsorberharze seien beispielsweise die sogenannten Amberlite der XAD-Serie der Firma Rohm & Haas, insbesondere Amberlite® XAD-1180 und Amberlite® XAD-7 genannt.

Pro Liter Adsorberharz werden im allgemeinen bis zu 20 g Ribloflavin adsorbiert, während die phosphorylierten Riboflavine bei geeignetem pH-Wert nicht gebunden werden.

Mit Vorteil führt man das erfindungsgemäße Verfahren so durch, daß man das bei dem Phosphorylierungsverfahren anfallende, etwa 5 bis 30 Gew.% unumgesetztes Riboflavin enthaltende rohe 5'-FMN in Wasser suspendiert, die Suspension mit einem Alkalihydroxid oder einer Stickstoffbase, insbesondere mit NaOH, auf einen pH-Wert zwischen 4 und 8, vorzugsweise 5,5 bis 6,5, insbesondere etwa 6 eingestellt und unter leichtem Erwärmen die Roh-5'-FMN-Salz-Lösung herstellt. Das Roh-5'-FMN kann gewünschtenfalls gleich in Form des bei der Phosphorylierung anfallenden Restfeuchte enthaltenden Filterkuchens eingesetzt werden.

Das Einstellen des pH-Wertes und damit die Bildung des 5'-FMN-Salzes kann im Prinzip mit allen Alkalihydroxiden oder geeigneten Stickstoffbasen erfolgen. Da jedoch bisher nur das Natriumsalz auf dem Markt gefragt ist, verwendet man im allgemeinen Natronlauge, die zudem ein besonders billiges Reagens ist. Arbeitet man mit anderen Basen als mit NaOH, dann müßte das gereinigte 5'-FMN-Salz gewünschtenfalls anschließend in das Natrium-5'-FMN überführt werden.

Als Alkalihydroxide seien außer dem bevorzugten NaOH noch KOH oder LiOH genannt. Als Stickstoffbasen kämen beispielsweise $NH_4OH$, Alkylamine, Dialkylamine, Trialkylamine, in denen die Alkylgruppen 1 bis 3 C-Atome enthalten, sowie Ethanolamine und cycloaliphatische Amine, wie Morpholin oder Piperidin in Betracht.

Die erhaltene rohe 5'-FMN-Salz-Lösung wird anschließend durch die mit Adsorberharz gefüllte Säule geleitet.

Das Eluat enthält je nach Kapazitätsauslastung des Adsorberharzes zwischen 0 und 5 %, vorzugsweise 0 bis 1, insbesondere nur etwa 0,5 % unumgesetztes Riboflavin und zwischen 65 und 80 % an 5'-FMN-Salz.

Die Regenerierung des Adsorberharzes erfolgt durch Waschen mit wäßriger NaOH-Lösung. Die Konzentration dieser NaOH-Lösung soll 0,01-5 molar, vorzugsweise etwa 0,1 molar sein. Das Ribloflavin kann auf diese Weise in Form einer konzentrierten Lösung seines Na-Salzes zurückgewonnen werden.

Aus dem bei der Regenerierung mit wäßriger NaOH-Lösung anfallenden Eluat kann das Riboflavin durch Ansäuern z.B. mit einer Mineralsäure, wie HCl, $H_2SO_4$ oder einer starken organischen Säure, wie Oxalsäure oder Ameisensäure in kristalliner Form zurückgewonnen werden.

Es war sehr überraschend, daß die Abtrennung des Riboflavins aus der so komplex zusammengesetzten 5'-FMN-Lösung durch eine schnelle Passage der Lösung durch ein geeignetes Adsorberharzbett so selektiv und sauber möglich ist und dadurch die aufwendigen mehrmaligen Lösungs- und Fällungssequenzen mit der schwierigen Abtrennung des schwerfiltrierbaren Riboflavins gemäß dem Stand der Technik entfallen können.

Weitere entscheidende Vorteile des Verfahrens sind:

1. Dadurch, daß das Riboflavin, welches im Vergleich zum Wertprodukt in wesentlich geringerer Menge enthalten ist, durch das Adsorberharz selektiv entfernt werden kann, werden wesentlich geringere Mengen an Adsorberharz benötigt als bei den bekannten Reinigungsverfahren, bei denen das Wertprodukt 5'-FMN adsorbiert wird.

2. Die Produktlösung wird durch die Adsorberharzpassage nur wenig verdünnt (maximale Verdünnung = 2:1).

3. Man kann nur mit Wasser als Lösungsmittel arbeiten, wodurch eine Lösungsmittelaufarbeitung entfällt.

4. Auch nach 50 Cyclen waren keine meßbaren Veränderungen des Adsorbermaterials eingetreten, so daß man eine sehr lange Standzeit der Adsorbersäulen erwarten kann.

5. Das unumgesetzte Riboflavin kann leicht in gereinigter und konzentrierter Form eluiert werden, so daß eine verlustarme schnelle Adsorptions-/Desorptionssequenz möglich ist.

Es wurde weiterhin überraschenderweise gefunden, daß das durch Behandeln mit dem Adsorberharz vorzugsweise durch Passage der Adsorberharzsäule weitgehend von Riboflavin befreite 5'-FMN-Salz in wäßriger Lösung durch Chromatographie an einem mit Alkylgruppen derivatisierten Reversed Phase Kieselgel präparativ auch ohne Mitverwendung von systemfremden Salz- oder Pufferlösungen weiter gereinigt werden kann, wenn man eine ausreichende Menge einer nicht zu verdünnten wäßrigen Lösung chromatographiert. Verdünntere wäßrige Lösungen können dagegen auf diese Weise nicht aufgetrennt werden.

Gegenstand der Erfindung ist daher auch ein Verfahren zur Reinigung von durch Phosphorylierung von Riboflavin und Umsetzen der dabei gebildeten, mit unumgesetztem Riboflavin, isomeren Riboflavinmonophosphaten und -diphosphaten verunreinigten Riboflavin-5'-phosphats mit Alkalihydroxiden oder Stickstoffbasen, vorzugsweise Natronlauge erhaltenem 5'-FMN-Salz, das dadurch gekennzeichnet ist, daß man das, wie oben beschrieben, durch Behandeln mit dem Adsorberharz, vorzugsweise das bei der Passage durch die Adsorberharzsäule erhaltene, weitgehend von unumgesetztem Riboflavin gereinigte 5'-FMN-Salz in Form einer 1 bis 15 Gew.%, vorzugsweise 4 bis 6 Gew.% Trockenmasse enthaltenden Lösung in Wasser mit einem pH-Wert zwischen 4 und 8, vorzugsweise 5,5 und 6,5, insbesondere etwa 6, in einer Mindestmenge von 5 bis 50 %, vorzugsweise 8 bis 20 % des Bettvolumens (BV) der Säule an einem mit Alkylgruppen derivatisierten Reversed Phase (RP) Kieselgel mit einer Kornfraktion im Bereich 10 bis 300 μ, vorzugsweise 20 bis 200 μ, mit Wasser oder einer Mischung aus Wasser und einem niederen aliphatischen Alkohol mit einem Alkoholgehalt zwischen 0 und 80 % als Elutionsmittel unter Druck chromatographiert.

Das Verhältnis von Trockensubstanz zu Trennmaterial liegt bei diesem Verfahrensschritt zwischen 1:200 und 1:7, vorzugsweise 1:25 bis 1:15, insbesondere etwa 1:20.

Als Trennmaterial verwendet man handelsübliches, mit Alkylgruppen derivatisiertes RP-Kieselgel der oben genannten Kornfraktion. Bekannte geeignete handelsübliche RP-Kieselgele haben Kornfraktionen von 20 bis 45 μ bzw. 30 bis 70 μ. Genannt seien beispielsweise Kieselgel-RP-8; Kieselgel-RP-12 und Kieselgel-RP-18, wie HD-SIL-RP-18 der Firma Orpregen.

Als niedere aliphatische Alkohole werden erfindungsgemäß z.B. Methanol, Ethanol, Isopropanol und Ethylenglykol bezeichnet. Mit besonderem Vorteil verwendet man Methanol.

Unter den angegebenen Bedingungen wird noch erhaltenes Riboflavin von dem Kieselgel adsorbiert. Wenn man für diese Feinreinigung 5′-FMN-Lösungen einsetzt, die einen Riboflavingehalt von weniger als 1 % aufweisen, kann man viele aufeinanderfolgende Trennungen vornehmen, ohne daß sich die Qualität der Reinigung verändert. Nach abgeschlossenem Chromatographiervorgang kann das adsorbierte Riboflavin relativ einfach durch Waschen mit einem mehr Alkohol enthaltenden Lösungsmittel, beispielsweise mit 60 %igem wäßrigem Methanol eluiert werden.

Die eigentliche chromatographische Trennung von 5′-FMN und seinen Nebenprodukten erfolgt mit Wasseralkoholgemischen, die weniger Alkohol, d.h. Alkoholmengen von 1 bis 20, vorzugweise etwa 10 % enthalten.

Beispielsweise erhält man die Verwendung von Silicalgel HD-SIL-RP 18 (20-40 μ) und einem Gemisch Methanol/Wasser = 10:90 die folgenden Fraktionen:

1. Eine Vorfraktion, enthaltend Polyphosphate, Diphosphate und 3′-FMN,

2. eine Zwischenfraktion, enthaltend 70 bis 85 % 5′-FMN neben 3′-FMN, 4′-FMN und 4′,5′-FDN sowie

3. eine Hauptfraktion mit einem 5′-FMN-Gehalt > 90 % neben 4′-FMN und 2′-FMN. In der 2. Hälfte des Elutionspeaks liegt 97 %iges 5′-FMN enthaltend 3 % 2′-FMN vor.

Mit Hilfe dieses chromatographischen Feinreinigungsschrittes kann man demnach bis zu 91 % reines 5′-FMN erhalten.

Das bei der Chromatographie als Elutionsmittel verwendete Wasser-Alkoholgemisch kann isokratisch, d.h. in konstantem Lösungsmittelverhältnis oer aber mit kontinuierlich veränderten Lösungsmittelverhältnis (Gradientenelution) eingesetzt werden. Beispielsweise kann man durch Gradientenelution mit von 0 % bis auf 30 % Methanol in Wasser ansteigenden Elutionsmittel sehr gute Trennungen erzielen.

Es war überraschend, daß man für diese präparative chromatographische Trennung keine Pufferlösung benötigt. Bei Einhaltung aller sonstigen Bedingungen, aber Einsatz von nur analytischen Mengen an 5′-FMN-Lösung wird keine Trennung erzielt. Es ist überraschend, daß sich bei Einhalten eines bestimmten pH-Wertes der Auftragslösung das System selbst puffert, wenn eine ausreichende Menge an Trenngemisch aufgetragen wird. Hierdurch ergibt sich der große Vorteil des Verfahrens, nämlich daß man ohne Fremdpuffer arbeiten kann. Ein Puffer wäre teuer und schwer zu entfernen. Er müßte in einem weiteren Verfahrensschrift vom Wertprodukt abgetrennt werden, wobei Wertprodukt verloren geht und Abwasserprobleme auftreten. Ein weiterer großer Vorteil des Verfahrens ist, daß man mit Wasser oder niedrigprozentigem Alkohol als Lösungsmittel arbeiten kann.

Selbstverständlich können auch auf anderem Wege hergestellte, weitgehend von unumgesetztem Riboflavin gereinigte Roh-5′-FMN-Salz-Lösungen auf die oben beschriebene Weise gereinigt werden. Gegenstand der Erfindung ist daher auch ein Verfahren zur präparativen Reinigung von einem weitgehend von Riboflavin freien, durch isomere Flavinmononucleotide und Flavindinucleotide verunreinigtem Mononatrium-riboflavin-5′-phosphat durch Chromatographie einer Natrium-5′-FMN-Lösung an einem mit Alkylgruppen derivatisierten RP-Kieselgel mit einer Kornfraktion im Bereich von 10 bis 300 μ ggf. unter Druck, das dadurch gekennzeichnet ist, daß man eine Lösung mit einer Konzentration von 1 bis 15 Gew.%, vorzugsweise 4 bis 6 Gew.% Trockensubstanz in Wasser oder einem Gemisch aus Wasser und einem niederen aliphatischen Alkohol mit einem Alkoholgehalt zwischen 0 und 80 Gew.% mit einem pH-Wert zwischen 4 und 7 in einer Mindestmenge von 5 bis 50 %, vorzugsweise 8 bis 20 % des Bettvolumens der Kieselgelsäule mit Wasser oder einer Mischung aus Wasser und einem niederen aliphatischen Alkohol mit einem Alkoholgehalt zwischen 0 und 80 Gew.% als Elutionsmittel chromatographiert.

Gegenstand der Erfindung ist weiterhin ein Verfahren zur Reinigung von durch Phosphorylierung von Riboflavin und Umsetzen des dabei gebildeten, mit unumgesetztem Riboflavin, isomeren Riboflavinmonophosphaten und -diphosphaten verunreinigten Riboflavin-5′-phosphats mit Alkalihydroxiden oder Stickstoffbasen, insbesondere Natronlauge, erhaltenem 5′-FMN-Salz, das dadurch gekennzeichnet ist, daß man das, wie oben beschrieben, durch Behandeln mit dem geeigneten Adsorberharz erhaltene, weitgehend von unumgesetztem Riboflavin gereinigte 5′-FMN-Salz in Form einer wäßrigen Lösung mit einem pH-Wert von 4 bis 8, vorzugsweise 5,5-6, bei Temperaturen von 20 bis 100°C, vorzugsweise 40 bis 60°C, einengt bis das 5′-FMN-Salz auskristallisiert, die Kristallsuspension abkühlt, vorzugsweise auf etwa 20°C, das kristalline 5′-FMN-Salz abtrennt und die Mutterlauge ggf. nach erneutem Einengen und Isolieren eines Zweitkristallisats in das Herstellungsverfahren zurückführt.

Gemäß dem Stand der Technik kann das Natrium-5′-FMN aus wäßriger Lösung bei einem pH-Wert von 5 bis 6,5 auch durch Zugabe von Ethanol gefällt werden. Hierbei bleiben vor allem die Diphosphate in Lösung.

Die erfindungsgemäße Kristallisation hat gegenüber dem genannten Stand der Technik wesentliche Vorteile.

1. Es bleiben anorganische Salze, wie NaCl oder Natriumphosphate, die aus dem Phosphorylierungsprozeß stammen, in jedem Fall gelöst, so daß immer ein spezifikationsgerechtes Produkt erhalten wird.

2. Kristallisiert bevorzugt 5'-FMN-Salz und etwa weniger bevorzugt 4'-FMN-Salz aus - und falls noch vorhanden - Riboflavin während sich das 3'-FMN überwiegend und die Diphosphate fast vollständig in der Mutterlauge verbleiben. Aus den Mutterlaugen läßt sich durch partielle Hydrolyse und sauer katalysierte Umlagerung weiteres 5'-FMN-Salz herstellen.

3. Bilden sich sehr schöne Kristalle, d.h. durch geeignetes Abkühlen lassen sich produktgerechte Kristalle herstellen, die leicht filtriert und gewaschen werden können.

4. Ist das verwendete Lösungsmittel Wasser billig und können Aufarbeitungsprobleme entfallen.

5. Durch die mögliche Rückführung der Diphosphate und die Isomerisierung der isomeren Flavinmononucleotide wird einerseits insgesamt eine maximale Ausbeute an 5'-FMN erhalten und andererseits das Abwasser weniger durch organischen Kohlenstoff belastet.

Es war überraschend, daß unter diesen Bedingungen der Verdampfungskristallisation bei dem vorgegebenen pH-Wert keine Hydrolyse des 5'-FMN-Salzes bzw. des Riboflavins auftritt. Ferner ist überraschend, daß sich unter diesen Bedingungen überwiegend das 5'-FMN anreichert und so durch eine Kristallisationsstufe ein typgerechtes Produkt erhalten werden kann.

Mit Hilfe des erfindungsgemäßen Verfahrens kann das durch Phosphorylierung von Riboflavin erhaltene 5'-FMN auf einfache Weise weitgehend von unumgesetztem Riboflavin, isomeren Flavinmononucleotiden und Flavindinucleotiden gereinigt werden. Die folgenden Beispiele sollen das Verfahren erläutern.

Beispiel 1

Durch eine Säule mit einem Durchmesser von 9 cm und einem Bettvolumen (BV) von 2 Litern (1) gefüllt mit dem Adsorberharz XAD-7 der Firma Rohm & Haas wurden jeweils nacheinander

a) 2 l einer durch Phosphorylierung von Riboflavin erhaltenen, mittels NaOH auf einen Wert von pH=6 eingestellten 5 %igen Lösung mit der aus der folgenden Tabelle I ersichtlichen Zusammensetzung

b) 2 l Wasser,

c) 1 l einer 0,1 m wäßrigen NaOH-Lösung und

d) 2 l Wasser gepumpt.

Das Eluat wurde mittels einer pH-Sonde und einem UV-Detektor kontrolliert.

Das Eluat wurde gesammelt bis die UV-Absorption auf 10 % des maximalen Wertes gefallen war. Man erhielt dabei etwa 2 l Eluat mit der aus der folgenden Tabelle I ersichtlichen Zusammensetzung.

Das bei der anschließenden Regenerierung gesondert aufgefangene Eluat enthielt das durch die NaOH-Lösung aus dem Ionenaustauscher herausgelöste Riboflavin in konzentrierter Form. Durch UV-Kontrolle wurde eine möglichst konzentrierte Riboflavinlösung gewonnen. Sie wurde anschließend mit HCl oder mit HCOOH angesäuert, 5 Minuten (min) zum Sieden erhitzt, der Niederschlag abfiltriert, mit Wasser neutral gewaschen und getrocknet. Auf diese Weise wurden ca. 85 % des absorbierten Riboflavins in Form eines ca. 98 % reinen Produktes zurückgewonnen.

Tabelle I

| Lösung | Roh-5'-FMN-Lösung | | | gereinigte 5'-FMN-Lösung | | |
|---|---|---|---|---|---|---|
| | Riboflavin | 5'-FMN | isomere Mono- und Diphosphate | Riboflavin | 5'-FMN | isomere Mono- und Diphosphate |
| | [%] | [%] | [%] | [%] | [%] | [%] |
| I | 20,8 | 64,5 | 14,4 | 0,6 | 80,3 | 19,1 |
| II | 18,9 | 57,9 | 23,9 | 0,5 | 76,0 | 23,5 |
| III | 14,5 | 60,1 | 25,4 | 0,0 | 74,3 | 25,7 |

Beispiel 2

Es wurde gearbeitet wie in Beispiel 1 beschrieben, nur wurde anstelle von dem Ionenaustauscher XAD-7 der Austauscher XAD-1180 der gleichen Firma verwendet. Dabei wurde folgendes Ergebnis erzielt:

Tabelle II

| | Roh-5'-FMN-Lösung | | | gereinigte 5'-FMN-Lösung | | |
|---|---|---|---|---|---|---|
| Lösung | Ribo-flavin | 5'-FMN | isomere Mono- und Diphosphate | Ribo-flavin | 5'-FMN | isomere Mono- und Diphosphate |
| | [%] | [%] | [%] | [%] | [%] | [%] |
| IV | 16,2 | 66,3 | 17,5 | 1,8 | 74,3 | 22,9 |

Beispiel 3

(Feinreinigung gemäß Anspruch 8)

Eine chromatographische Säule mit einem Innendurchmesser von 30 cm wurde über eine Länge von 15 cm mit dem Kieselgel HD-SIL-RP 18 der Firma Orpregen (20-45 μ) in Methanol/Wasser = 10/90 gefüllt.
Anschließend wurden
A. 1000 ml (0,1 BV) und
B. 2000 ml (0,2 BV)
einer analog Beispiel 1 mit Adsorberharz behandelten wäßrigen 5'-FMN-Lösung, die auf eine Konzentration von 5 Gew.% Trockensubstanz (TS) gebracht worden war, und einen pH-Wert von 6 aufwies, aufdosiert und mit Methanol/Wasser = 10/90 chromatographiert.
Das Eluat wurde mittels Messung der UV-Absorption bei 530 nm untersucht und entsprechend dem Elutionsdiagramm in 3 Fraktionen gesammelt. Die erste und die zweite Fraktion betrugen etwa 1/3 des BV, die dritte Fraktion etwa 2 BV. Die eingesetzte 5'-FMN-Lösung sowie die erhaltenen Fraktionen wurden mittel HPLC (Hypersil-ODS RP-18; 0,1 m Ammoniumformiat/Ameisensäure; pH = 3,9; 24 % Methanol, UV = 435 nm) untersucht. Die Zusammensetzung der eingesetzten 5'-FMN-Lösung sowie der nach Aufdosieren von 0,1 BV (A) bzw. 0,2 BV (B) Ausgangslösung erhaltenen 3 Fraktionen ist in der folgenden Tabelle III angegeben. Die Wertfraktionen (Fraktionen II und III) wurden bei 60°C am Rota-vapor-Verdampfer eingeengt und auf 20°C abgekühlt. Dss auskristallisierte Produkt wurde abgesaugt und mit Eiswasser nachgewaschen.

Tabelle III

| | Ausgangs-lösung [Gew.%] | A. Dosiermenge 1000 ml (10 % des BV) | | | B. Dosiermenge 2000 ml (20 % des BV) | | |
| | | Fraktion I (1/3 BV) [Gew.%] | Fraktion II (1/3 BV) [Gew.%] | Fraktion III (2 BV) [Gew.%] | Fraktion I (1/3 BV) [Gew.%] | Fraktion II (1/3 BV) [Gew.%] | Fraktion III (2 BV) [Gew.%] |
|---|---|---|---|---|---|---|---|
| Riboflavin | 0,5 | 0 | 0 | 0 | 0 | 0 | 0 |
| 5'-FMN | 67,9 | 14,9 | 80,2 | 90,6 | 39,9 | 84,0 | 90,8 |
| 4'-FMN | 6,8 | 3,6 | 14,8 | 4,9 | 4,1 | 9,6 | 6,8 |
| 3'-FMN | 6,2 | 16,0 | 2,6 | 0,3 | 14,1 | 4,1 | 0,1 |
| 2'-FMN | 0,3 | - | 0,2 | 2,9 | - | - | 2,3 |
| Diphosphate | 18,3 | 65,5 | 2,25 | 1,9 | 41,9 | 2,1 | - |

Beispiel 4

(Feinreinigung gemäß Anspruch 9)

Eine durch Phosphorylieren von 70 g Riboflavin mit $POCl_3 \cdot H_2O$ erhaltene 5'-FMN-Lösung wurde mit NaOH auf einen pH-Wert von 5,5 und eine Konzentration von 5 Gew.% gebracht und analog Beispiel 1 durch ein Absorberharzbett (XAD-7) geleitet. Hierdurch wurde eine weitgehend von unumgesetztem Riboflavin befreite 5'-FMN-Lösung erhalten, deren Zusammensetzung aus Tabelle IV ersichtlich ist. Die so erhaltene Lösung wurde bei etwa 50°C eingedampft. Hierbei wurden 200 g einer übersättigten Lösung erhalten, aus der bereits in der Wärme das 5'-FMN in hoher Reinheit auskristallisierte. Die Kristallsuspension wurde auf etwa 20°C abgekühlt, filtriert und das Kristallisat mit wenig Eiswasser gewaschen. Man erhielt hierbei 62 g Erstkristallisat der aus Tabelle IV ersichtlichen Zusammensetzung.

Durch weiteres Einengen des Filtrats auf etwa 100 g bei etwa 50°C und Abkühlen auf etwa 20°C wurden weitere 20 g eines Zweitkristallisats sowie die Mutterlauge der aus Tabelle IV ersichtlichen Zusammensetzung erhalten. Das erhaltene Zweitkristallisat wurde in die Erstkristallisation zurückgeführt, die Mutterlauge in den Phosphorylierungsprozess zurückgeführt.

### Tabelle IV

| | Lösung vor der Kristallisation | Erstkristallisat | Zweitkristallisat | Mutterlauge |
|---|---|---|---|---|
| Riboflavin | 0,8 | 0,7 | 0 | 0 |
| 5'-FMN | 71,8 | 78,8 | 31,4 | 19,0 |
| 4'-FMN | 10,9 | 11,4 | 11,5 | 5,3 |
| 3'-FMN | 8,2 | 5,7 | 21,6 | 16,2 |
| 2'-FMN | 0,4 | 0,2 | 0 | 0 |
| Diphosphate | 7,9 | 3,2 | 35,5 | 59,5 |

### Patentansprüche

1. Verfahren zur Reinigung von durch Phosphorylierung von Riboflavin und Umsetzen des dabei gebildeten, mit unumgesetztem Riboflavin, isomeren Riboflavinmonophosphaten und -diphosphaten verunreinigten Riboflavin-5'-phosphats (5'-FMN) mit Alkalihydroxiden oder Stickstoffbasen erhaltenen Salzen von Riboflavin-5'-phosphat, dadurch gekennzeichnet, daß man

a) aus dem bei der Phosphorylierung erhaltenen Roh-5'-FMN, Wasser, dem Alkalihydroxid oder der Stickstoffbase, ggf. unter Erwärmen auf 30 bis 100°C eine etwa 1 bis 5 gew.%ige homogene, klare, wäßrige Roh-5'-FMN-Salz-Lösung mit einem pH-Wert zwischen 4 und 8 herstellt,

b) die erhaltene Lösung mit einem geeigneten polymeren Adsorberharz in Form unlöslicher kleiner Kügelchen behandelt, das sich durch besondere mechanische Fest.gkeit, makroretikulare Porosität, eine gleichförmige Porengrößenverteilung, eine große aktive Oberfläche und durch eine chemisch homogene, nichtionogene Struktur auszeichnet und durch Co-Polymerisation aus Polystyrol/Divinylbenzol; Acrylsäurederivaten/Divinylbenzol oder Methacrylsäurederivaten/Divinylbenzol hergestellt wurde, und

c) aus der dabei erhaltenen Lösung, das weitgehend von unumgesetztem Riboflavin gereinigte 5'-FMN-Salz isoliert und gewünschtenfalls die Lösung einer anschließenden Feinreinigung zuführt.

2. Verfahren gemäß Anspruch 1, dadurch gekennzeichnet, daß man

a) aus dem bei der Phosphorylierung erhaltenen Roh-5'-FMN, Wasser und Natronlauge eine etwa 1 bis 5 gew.%ige homogene, klare wäßrige Lösung von Natrium-5'-FMN mit einem pH-Wert zwischen 4 und 8 herstellt,

b) die erhaltene Lösung mit dem geeigneten polymeren Adsorberharz behandelt und

c) aus der dabei erhaltenen Lösung das weitgehend von Riboflavin gereinigte Natrium-5′-FMN isoliert und gewünschtenfalls einer anschließenden Feinreinigung zuführt.

3. Verfahren gemäß Anspruch 1, dadurch gekennzeichnet, daß man die homogene wäßrige Roh-5′-FMN-Salz-Lösung mit einem pH-Wert zwischen 4 und 8 durch eine Säule leitet, die mit dem geeigneten polymeren Adsorberharz gefüllt ist, und aus dem dabei erhaltenen Eluat das gereinigte 5′-FMN-Salz isoliert oder das Eluat einer anschließenden Feinreinigung zuführt.

4. Verfahren gemäß Anspruch 1, dadurch gekennzeichnet, daß man als geeignetes Adsorberharz ein Adsorberharz verwendet, das durch Copolymerisation von Acrylsäurederivaten mit Divinylbenzol hergestellt worden ist.

5. Verfahren'gemäß Anspruch 1, dadurch gekennzeichnet, daß man eine homogene wäßrige Roh-5′-FMN-Salz-Lösung mit einem pH-Wert zwischen 5,5 und 6,5 verwendet.

6. verfahren gemäß Anspruch 1, dadurch gekennzeichnet, daß man das Adsorberharz nach Abschluß des Reinigungsverfahrens durch Waschen mit 0,01 bis 5 molarer wäßriger NaOH-Lösung regeneriert.

7. Verfahren gemäß Anspruch 6, dadurch gekennzeichnet, daß man aus dem bei der Regenerierung anfallenden Eluat das Riboflavin durch Ansäuern in kristalliner Form zurückgewinnt.

8. Verfahren gemäß Anspruch 1, dadurch gekennzeichnet, daß man das durch Behandeln mit dem geeigneten Adsorberharz erhaltene, weitgehend von unumgesetztem Riboflavin gereinigte 5′-FMN-Salz in Form einer 1 bis 15 Gew.% Trockenmasse enthaltenden Lösung in Wasser mit einem pH-Wert zwischen 4 und 8 in einer Mindestmenge von 5 bis 50 % des Bettvolumens der Säule an einem mit Alkylgruppen derivatisierten RP-Kieselgel mit einer Kornfraktion im Bereich von 10 bis 300 μ ggf. unter Druck mit Wasser oder einer Mischung aus Wasser und einem niederen aliphatischen Alkohol mit einem Alkoholgehalt zwischen 0 und 80 % als Elutionsmittel chromatographiert.

9. Verfahren gemäß Anspruch 8, dadurch gekennzeichnet, daß man die weitgehend von Riboflavin gereinigte 5′-FMN-Salz-Lösung an mit Alkylgruppen derivatisiertem RP-Kieselgel mit einer Kornfraktion im Bereich von 20 bis 70 μm chromatographiert.

10. Verfahren gemäß Anspruch 1, dadurch gekennzeichnet, daß man das durch Behandeln mit dem geeigneten Adsorberharz erhaltene, weitgehend von unumgesetztem Riboflavin gereinigte 5′-FMN-Salz in Form einer wäßrigen Lösung mit einem pH-Wert von 4 bis 8 bei Temperaturen von 20 bis 100°C einengt bis das 5′-FMN-Salz auskristallisiert, die Kristallsuspension auf etwa 20°C abkühlt, das kristalline 5′-FMN-Salz abtrennt und die Mutterlauge gegebenenfalls nach erneutem Einengen und Isolieren eines Zweitkristallisats in das Herstellungsverfahren zurückführt.

11. Verfahren zur präparativen Reinigung von einem weitgehend von Riboflavin freien, durch isomere Flavinmononucleotide und Flavindinucleotide verunreinigtem Mononatrium-riboflavin-5′-phosphat durch Chromatographie einer Natrium-5′-FMN-Lösung an einem mit Alkylgruppen derivatisierten RP-Kieselgel mit einer Kornfraktion im Bereich von 10 bis 300 μ ggf. unter Druck, dadurch gekennzeichnet, daß man eine Lösung mit einer Konzentration von 1 bis 15 Gew.%, vorzugsweise 4 bis 6 Gew.% Trockensubstanz in Wasser oder einem Gemisch aus Wasser und einem niederen aliphatischen Alkohol mit einem Alkoholgehalt zwischen 0 und 80 Gew,% mit einem pH-Wert zwischen 4 und 8 in einer Mindestmenge von 5 bis 50 % des Bettvolumens der Kieselgelsäule mit Wasser oder einer Mischung aus Wasser und einem niederen aliphatischen Alkohol mit einem Alkoholgehalt zwischen 0 und 80 Gew.% als Elutionsmittel chromatographiert.

12. Verfahren gemäß den Ansprüchen 1, 8 und 10, dadurch gekennzeichnet, daß man das gereinigte 5′-FMN-Salz ggf. in das Natrium-5′-FMN überführt.

## Claims

1. A process for the purification of salts of riboflavin 5′-phosphate obtained by phosphorylation of ribo-flavin and reaction of the resulting riboflavin 5′-phosphate (5′-FMN), contaminated with unconverted ribo-flavin and isomeric riboflavin monophosphates and di-phosphates, with an alkali metal hydroxide or a nitrogen base, wherein

a) a roughly 1-5% strength by weight homogeneous, clear, aqueous crude 5′-FMN salt solution having a pH of from 4 to 8 is prepared from the crude 5′-FMN obtained in the phosphorylation, water and the alkali metal hydroxide or the nitrogen base, if necessary with heating at 30 - 100°C,

b) the resulting solution is treated with a suitable polymeric adsorber resin in the form of small insoluble spheres which has particularly high mechanical strength, macroreticular porosity, a uniform pore size distribution, a large active surface area and a chemically homogeneous, nonionic structure and has been prepared by copolymerization from polystyrene/ divinylbenzene, acrylic acid derivatives/divinylbenz-ene or methacrylic acid derivatives/divinylbenzene, and

c) the 5′-FMN salt substantially freed from unconverted riboflavin is isolated from the resulting solution and, if desired, the solution is fed to a subsequent fine purification.

2. A process as claimed in claim 1, wherein

a) a roughly 1-5% strength by weight, homogeneous, clear aqueous solution of sodium 5′-FMN having a pH of from 4 to 8 is prepared from the crude 5′-FMN obtained in the phosphorylation, water and sodium hydroxide solution,

b) the resulting solution is treated with the suitable polymeric adsorber resin and

c) the sodium 5′-FMN substantially freed from riboflavin is isolated from the resulting solution and, if desired, fed to a subsequent fine purification.

3. A process as claimed in claim 1, wherein the homogeneous aqueous crude 5′-FMN salt solution having a pH of from 4 to 8 is passed through a column which is filled with the suitable polymeric adsorber resin, and the purified 5′-FMN salt is isolated from the resulting eluate, or the eluate is fed to a subsequent fine purification.

4. A process as claimed in claim 1, wherein the suitable adsorber resin used is one which has been prepared by copolymerizing an acrylic acid derivative with divinylbenzene.

5. A process as claimed in claim 1, wherein a homogeneous aqueous crude 5′-FMN salt solution having a pH of from 5.5 to 6.5 is used.

6. A process as claimed in claim 1, wherein the adsorber resin is regenerated by washing with 0.01-5 molar aqueous NaOH solution after the purification process is complete.

7. A process as claimed in claim 6, wherein the riboflavin is recovered in crystalline form, by acidification, from the eluate obtained in the regeneration.

8. A process as claimed in claim 1, wherein the 5′-FMN salt obtained by treatment with the suitable adsorber resin, substantially freed from unconverted riboflavin and in the form of an aqueous solution containing from 1 to 15% by weight of dry substance and having a pH of from 4 to 8 is chromatographed, under atmospheric or super-atmospheric pressure, in a minimum amount of from 5 to 50% of the bed volume of the column over an RP silica gel derivatized with alkyl groups and having a particle size fraction of from 10 to 300 μm, using water, or a mixture of water and a lower aliphatic alcohol having an alcohol content of from 0 to 80%, as the eluant.

9. A process as claimed in claim 8, wherein the 5′-FMN salt solution substantially freed from riboflavin is chromatographed over an RP silica gel derivatized with alkyl groups and having a particle size fraction of from 20 to 70 μm.

10. A process as claimed in claim 1, wherein the 5′-FMN salt obtained by treatment with the suitable adsorber resin, substantially freed from unconverted riboflavin and in the form of an aqueous solution having a pH of from 4 to 8, is evaporated down at from 20 to 100°C until the 5′-FMN salt crystallizes out, the suspension of crystals is cooled to about 20°C, the crystalline 5′-FMN salt is isolated and the mother liquor is recycled to the preparation process, if necessary after further evaporation and isolation of a second batch of crystals.

11. A process for the preparative purification of monosodium riboflavin 5′-phosphate, substantially free of riboflavin and contaminated with isomeric flavin mononucleotides and flavin dinucleotides, by chromatographing a sodium 5′-FMN solution under atmospheric or superatmospheric pressure, over an RP silica gel derivatized with alkyl groups and having a particle size fraction of from 10 to 300 μm, wherein a solution having a concentration of from 1 to 15, preferably from 4 to 6, % by weight of dry substance in water, or in a mixture of water and a lower aliphatic alcohol having an alcohol content of from 0 to 80% by weight, and a pH of from 4 to 8 is chromatographed in a minimum amount of from 5 to 50% of the bed volume of the silica gel column, using water, or a mixture of water and a lower aliphatic alcohol having an alcohol content of from 0 to 80% by weight, as the eluant.

12. A process as claimed in claims 1, 8 and 10, wherein the purified 5′-FMN salt is, if required, converted into sodium 5′-FMN.

**Revendications**

1. Procédé de purification de sels de riboflavine-5′-phosphate, obtenus par phosphorylation de riboflavine et mise en réaction, avec des hydroxydes alcalins ou des bases azotées, du riboflavine-5′-phosphate (5′-FMN) ainsi formé, contaminé par de la riboflavine n'ayant pas réagi et par des monophosphates et diphosphate de riboflavine isomères, caractérirsé en ce que

a) on prépare, à partir du 5′-FMN brut obtenu par la phosphorylation, d'eau et de l'hydroxyde alcalin ou de la base azotée, éventuellement avec chauffage à une température de 30 à 100°C, une solution aqueuse de sel de 5′-FMN brut à environ 1-5% en poids, homogène et limpide, ayant une valeur du pH comprise entre 4 et 8

b) on traite la solution obtenue par une résine adsorbante polymère appropriée sous forme de petits globules insolubles, résine qui se caractérise par sa résistance mécanique particulière, par sa porosité macroréticulaire, par une distribution uniforme des grosseurs de pores, par une grande surface active et par une structure non ionogène, chimiquement homogène, et qui a été préparée par copolymérisation à partir de polystyrène/divinylbenzène, dérivés d'acide acrylique/divinylbenzène ou dérivés d'acide méthacrylique/divinylbenzène, et

c) on isole, de la solution ainsi obtenues, le sel de 5′-FMN débarrassé dans une large mesure de la riboflavine n'ayant pas réagie et, au cas où on le désire, on dirige la solution vers une purification poussée subséquente.

2. Procédé selon la revendication 1, caractérisé en ce que

a) on prépare, à partir du 5′-FMN brut obtenu par la phosphorylation, d'eau et de lessive de soude, une solution aqueuse de 5′-FMN sodique à environ 1-5% en poids, homogène et limpide, ayant une valeur du pH comprise entre 4 et 8,

b) on traite la solution obtenue par la résine adsorbante polymère appropriée et

c) on isole, de la solution ainsi obtenue, le 5′-FMN sodique débarrassé dans une large mesure de la riboflavine n'ayant pas réagi et, au cas où on le désire, on la dirige vers une purification poussée subséquente.

3. Procédé selon la revendication 1, caractérisé en ce qu'on envoie la solution aqueuse homogène de sel de 5′-FMN brut, ayant une valeur du pH comprise entre 4 et 8, à travers une colonne qui est remplie de la résine adsorbante polymère appropriée, et on isole, de l'éluat ainsi obtenu, le sel de 5′-FMN purifié ou on dirige l'éluat vers une purification poussée subséquente.

4. Procédé selon la revendication 1, caractérisé en ce qu'on utilise, comme résine adsorbante appropriée, une résine adsorbante qui a été préparée par copolymérisation de dérivés d'acide acrylique avec du divinylbenzène.

5. Procédé selon la revendication 1, caractérisé en ce qu'on utilise une solution aqueuse homogène de sel de 5′-FMN ayant une valeur du pH comprise entre 5,5 et 6,5.

6. Procédé selon la revendication 1, caractérisé en ce qu'après l'achèvement de l'opération de purification, on régénère la résine adsorbante par lavage avec une solution aqueuse de NaOH ayant une molarité de 0,01 à 5.

7. Procédé selon la revendication 6, caractérisé en ce qu'à partir de l'éluat formé au cours de la régénération, on récupère la riboflavine sous forme cristalline par acidification.

8. Procédé selon la revendication 1, caractérisé en ce qu'on chromatrographie le sel de 5′-FMN, obtenu par traitement par la résine adsorbante appropriée, débarrassé dans une large mesure de riboflavine n'ayant pas réagi, sous forme d'une solution dans de l'eau contenant 1 à 17% en poids de matière sèche et ayant une valeur du pH comprise entre 4 et 8, en une quantité minimale de 5 à 50% du volume du lit dans la colonne, sur un gel de silice RP dérivatisé par des groupements alkyle et ayant une fraction granulométrique dans la gamme de 10 à 300 μm, éventuellement sous pression, avec, en tant qu'éluant, de l'eau ou un mélange d'eau et d'un alcool aliphatique inférieur ayant une teneur en alcool comprise entre 0 et 80%.

9. Procédé selon la revendication 8, caractérisé en ce qu'on chromatographie la solution de sel de 5′-FMN débarrassée dans une large mesure de la riboflavine sur du gel de silice RP dérivatisé par des groupements alkyle, ayant une fraction granulométrique dans la gamme de 20 à 70 μm.

10. Procédé selon la revendication 1, caractérisé en ce qu'on concentre, à des températures de 20 à 100°C, le sel de 5′-FMN obtenu par traitement par la résine absorbante appropriée et débarrassée dans une large mesure de la riboflavine n'ayant pas réagi, sous forme d'une solution aqueuse ayant une valeur du pH de 4 à 8, jusqu'à ce que le 5′-FMN se sépare à l'état cristallin, on refroidit la suspension de cristaux à 20°C environ, on sépare le sel de 5′-FMN cristallin et on recycle la liqueur mère dans le procédé de préparation, éventuellement après une nouvelle concentration et l'isolement d'un second produit de cristallisation.

11. Procédé de purification technique d'un riboflavine-5′-phosphate monosodique débarrassé de riboflavine dans une large mesure et contaminé par des mononuléotides de flavine et des dinucléotides de flavine isomères, par chromatographie d'une solution de 5′-FMN sodique sur un gel de silice RP dérivatisé par des groupements alkyle et ayant une fraction granulométrique dans la gamme de 10 à 300 μm, éventuellement sous pression, caractérisé en ce qu'on chromatoraphie une solution ayant une concentration de 1 à 15% en poids, de préférence de 4 à 6% en poids de substance sèche, dans de l'eau ou dans un mélange d'eau et d'un alcool aliphatique inférieur ayant une teneur en alcool comprise entre 0 et 80% en poids, avec un pH de 4 à 8, en une quantité minimale de 5 à 50% du volume du lit dans la colonne de gel de silice, avec, en tant qu'éluant, de l'eau ou un mélange d'eau et d'un alcool aliphatique inférieur ayant une teneur en alcool comprise entre 0 et 80% en poids.

12. Procédé selon les revendications 1, 8 et 10, caractérisé en ce qu'on transforme éventuellement le sel de 5′-FMN purifié en 5′-FMN sodique.